# EUROPÄISCHE PATENTANMELDUNG

(11) **EP 1 962 491 A2**
(43) Veröffentlichungstag der Anmeldung: **27.08.2008**
(21) Anmeldenummer: 08003226.1
(22) Anmeldetag: 22.02.2008
(51) Int. Cl.: H04N 1/60

(54) **System zum Bebildern von Druckformen**

(30) Priorität: 24.02.2007 DE 102007009091
(71) Anmelder: manroland AG, 63075 Offenbach (DE)
(72) Erfinder: Probian, Dirk, 86405 Meitingen (DE); Kersch, Robert, 86157 Augsburg (DE)
(74) Vertreter: Ulrich, Thomas

(57) **Zusammenfassung**

Die Erfindung betrifft ein System zum Bebildern von Druckformen, mit einem Raster Image Prozessor (20) zur Zerlegung eines Druckbilddatensatzes in Farbseparationsdatensätze, mit einem Speichermedium (21) zum Speichern von Farbseparationsdatensätzen, mit Steuereinrichtungen (27) und mit Bebilderungseinrichtungen (28), wobei jede Steuereinrichtung (27) zum Bebildern einer Druckform auf Basis eines Farbseparationsdatensatzes die der Bebilderung der jeweiligen Druckform dienende Bebilderungseinrichtung (28) ansteuert. Erfindungsgemäß ist in jede Steuereinrichtung (27) eine Korrektureinrichtung integriert, um in dem Speichermedium (21) gespeicherte, druckstellenunspezifische Farbseparationsdatensätze (22, 23, 24, 25) in druckstellenspezifische Farbseparationsdatensätze umzurechnen, die zur Ansteuerung der Bebilderungseinrichtungen (28) verwendbar sind.

## Beschreibung

Die Erfindung betrifft ein System zum Bebildern von Druckformen gemäß dem Oberbegriff des Anspruchs 1.

Beim Drucken mit festen Druckformen wird prinzipiell zwischen Druckverfahren unterschieden, die auf der einen Seite mit einmal beschreibbaren Druckformen oder auf der anderen Seite mit wiederbeschreibbaren Druckformen arbeiten. Druckverfahren, die wiederbeschreibbare Druckformen verwenden, werden auch unter dem Schlagwort "computer to press / direct imaging" zusammengefasst.

Die Anmelderin vertreibt unter der Produktbezeichnung "DICOweb" digitale Druckmaschinen, die mit wiederbeschreibbaren sowie löschbaren Druckformen arbeiten. Bei der Verwendung von Druckformen nach der DICOweb-Technologie wird ein Druckformträger, vorzugsweise ein Druckformgrundzylinder, einem Bebilderungsschritt unterzogen. An das Bebildern der Druckform schließt sich gegebenenfalls ein Fixieren und Konditionieren der bebilderten Druckform an. Die Grundzüge der DICOweb-Technologie sind aus "Handbuch der Printmedien, Helmut Kipphan, Seiten 674 bis 680, Jahr 2000, Springer-Verlag" bekannt.

Zum Bebildern einer wiederbeschreibbaren Druckform dient eine Bebilderungseinrichtung, um die entsprechende Druckform druckbildabhängig zu bebildern. Nach der DICOweb-Technologie wird mit Hilfe einer Bebilderungseinrichtung ein Bebilderungsmaterial über ein Thermotransferverfahren auf den Druckformträger aufgetragen. Zur Ansteuerung einer Bebilderungseinrichtung, mit der eine Druckform bebilderbar ist, dient nach dem Stand der Technik eine der Bebilderungseinrichtung zugeordnete Steuerungseinrichtung, die auf Grundlage eines Farbseparationsdatensatzes die jeweilige Bebilderungseinrichtung ansteuert.

Nach der Praxis werden Farbseparationsdätensätze aus einem Druckbilddatensatz mit Hilfe eines Raster Image Prozessors gewonnen, wobei die vom Raster Image Prozessor bereitgestellten Farbseparationsdatensätze mit Hilfe einer Korrektureinrichtung in druckstellenspezifische Farbseparationsdatensätze umgewandelt werden, die letztendlich in einem Speichermedium abgespeichert werden. Die in dem Speichermedium abgespeicherten, druckstellenspezifischen Farbseparationsdatensätze werden Steuerungseinrichtungen zur Verfügung gestellt, wobei jede Steuerungseinrichtung eine Bebilderungseinrichtung zur Bebilderung einer Druckform ansteuert.

Bei aus der Praxis bekannten Systemen zur Bebilderung von Druckformen werden demnach unter Verwendung eines Raster Image Prozessors sowie einer Korrektureinrichtung druckstellenspezifische Farbseparationsdatensätze erzeugt und gespeichert. Diese druckstellenspezifischen Farbseparationsdatensätze werden dann Steuerungseinrichtungen zugeordnet, die Bebilderungseinrichtungen zur Bebilderung von Druckformen ansteuern. Die Bereitstellung druckstellenspezifischer Farbseparationsdatensätze erfolgt demnach nach der Praxis sequentiell in einer zentralen Korrektureinrichtung.

Hiervon ausgehend liegt der vorliegenden Erfindung das Problem zugrunde, ein neuartiges System zum Bebildern von Druckformen zu schaffen. Dieses Problem wird durch ein System zum Bebildern von Druckformen gemäß Anspruch 1 gelöst.

Erfindungsgemäß ist in jede Steuereinrichtung eine Korrektureinrichtung integriert, um in dem Speichermedium gespeicherte, druckstellenunspezifische Farbseparationsdatensätze in druckstellenspezifische Farbseparationsdatensätze umzurechnen, die zur Ansteuerung der Bebilderungseinrichtungen verwendbar sind.

Bei dem erfindungsgemäßen System zum Bebildern von Druckformen erfolgt die Bereitstellung druckstellenspezifischer Farbseparationsdatensätze dezentral, wobei entsprechende Korrektureinrichtungen in die Steuerungseinrichtungen, die der Ansteuerung der Bebilderungseinrichtungen dienen, integriert sind. Bei dem erfindungsgemäßen System zum Bebildern von Druckformen werden demnach im Speichermedium druckstellenunspezifische Farbseparationsdatensätze gespeichert, die eigentliche Korrektur bzw. Anpassung der druckstellenunspezifischen Farbseparationsdatensätze an die geometrischen Gegebenheiten der Druckmaschine erfolgt erst in den Steuerungseinrichtungen, erfolgt demnach dezentral sowie parallelisiert.

Bevorzugte Weiterbildungen der Erfindung ergeben sich aus den Unteransprüchen und der nachfolgenden Beschreibung. Ein Ausführungsbeispiel der Erfindung wird, ohne hierauf beschränkt zu sein, an Hand der Zeichnung näher erläutert. Dabei zeigt:
- Fig. 1:: ein Blockschaltbild eines aus dem Stand der Technik bekannten Systems zum Bebildern von Druckformen; und
- Fig. 2:: ein Blockschaltbild eines erfindungsgemäßen Systems zum Bebildern von Druckformen.

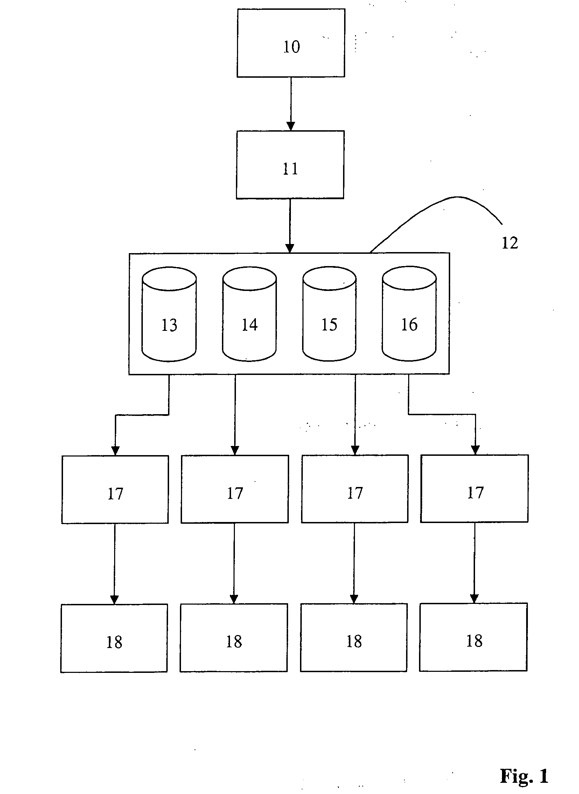

Die hier vorliegende Erfindung betrifft ein System zum Bebildern von Druckformen. Bevor auf das erfindungsgemäße System zum Bebildern von Druckformen eingegangen wird, soll vorab ein aus dem Stand der Technik bekanntes System zum Bebildern von Druckformen unter Bezugnahme auf Fig. 1 beschrieben werden.

So zeigt Fig. 1 ein aus dem Stand der Technik bekanntes System zum Bebildern von Druckformen, wobei das aus dem Stand der Technik bekannte System einen Raster Image Prozessor 10 umfasst, der einen Druckbilddatensatz in Farbseparationsdatensätze zerlegt.

Für jede am Druck beteiligte Druckfarbe wird ein Farbseparationsdatensatz erzeugt. Erfolgt demnach ein autotypischer Zusammendruck unter Verwendung der Druckfarben Cyan, Magenta, Gelb und Schwarz, so werden vom Raster Image Prozessor 10 vier Farbseparationsdatensätze bereitgestellt. Das aus dem Stand der Technik bekannte System zum Bebildern von Druckformen verfügt weiterhin über eine Korrektureinrichtung 11, die zentral sowie sequentiell aus den vom Raster Image Prozessor 10 bereitgestellten, druckstellenunspezifischen Farbseparationsdatensätzen druckstellenspezifische Farbseparationsdatensätze erzeugt, wobei die hierbei erzeugten, korrigierten bzw. druckstellenspezifischen Farbseparationsdatensätze in einem Speichermedium 12 gespeichert werden. Gemäß Fig. 1 sind in dem Speichermedium 12 vier korrigierte, druckstellenspezifische Farbseparationsdatensätze 13, 14, 15 und 16 gespeichert. Jeder im Speichermedium 12 gespeicherte, druckstellenspezifische Farbseparationsdatensatz 13; 14, 15 und 16 wird einer Steuerungseinrichtung 17 übermittelt, die auf Basis des entsprechenden Farbseparationsdatensatzes eine Bebilderungseinrichtung 18 ansteuert. Mit Hilfe der Bebilderungseinrichtung 18 wird Bebilderungsmaterial auf die für die jeweilige Farbseparation zu bebildernde Druckform aufgetragen.

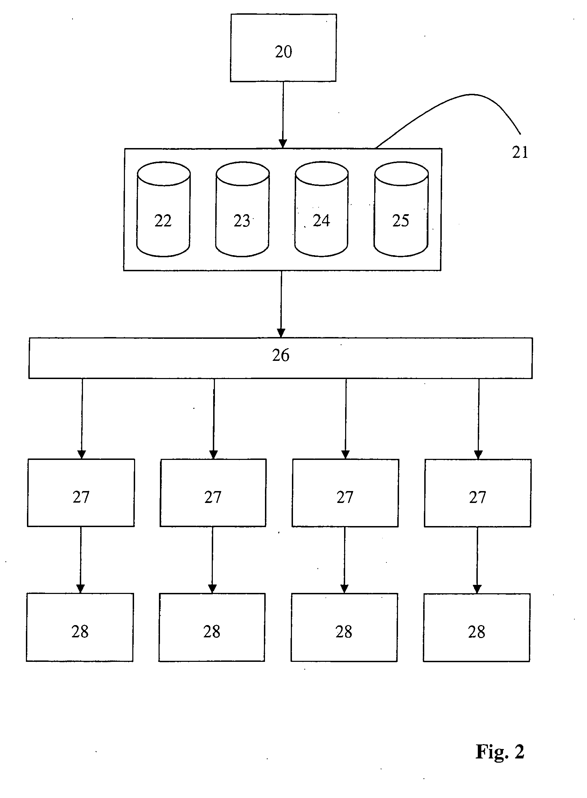

Demgegenüber visualisiert Fig. 2 die Struktur eines erfindungsgemäßen Systems zum Bebildern von Druckplatten. So verfügt auch das erfindungsgemäße System zum Bebildern von Druckplatten über einen Raster Image Prozessor 20, wobei der Raster Image Prozessor 20 wiederum einen Druckbilddatensatz in mehrere Farbseparationsdatensätze zerlegt, wobei die Anzahl der vom Raster Image Prozessor bereitgestellten Farbseparationsdatensätze der Anzahl der am Druck beteiligten Druckfarben entspricht. Die vom Raster Image Prozessor 20 bereitgestellten Farbseparationsdatensätze sind in einem Speichermedium 21 speicherbar, wobei gemäß Fig. 2 im Speichermedium 21 insgesamt vier Farbseparationsdatensätze 22, 23, 24 und 25 gespeichert sind. Die Anzahl der Farbseparationsdatensätze hängt jedoch, wie bereits erwähnt, von der Anzahl der am Druck beteiligten Druckfarben ab.

Bei den Farbseparationsdatensätzen 22, 23, 24 und 25, die beim erfindungsgemäßen Bebilderungssystem im Speichermedium 21 gespeichert werden, handelt es sich um unkorrigierte und demnach druckstellenunspezifische Farbseparationsdatensätze.

Jeder der im Speichermedium 21 gespeicherten Farbseparationsdatensätze 23 bis 25 ist einer Steuereinrichtung 27 zuführbar, wobei in jede Steuereinrichtung 27 eine Korrektureinrichtung integriert ist, um den jeweiligen druckstellenunspezifischen Farbseparationsdatensatz in einen druckstellenspezifischen Farbseparationsdatensatz umzurechnen. Dieser wird dann von der jeweiligen Steuerungseinrichtung 27 zur Ansteuerung der entsprechenden Bebilderungseinrichtung 28 verwendet. Die Steuerungseinrichtungen 27 sind demnach als Steuer- und Korrektureinrichtungen ausgeführt.

Neben einer Korrektureinrichtung ist in jede der Steuerungseinrichtungen 27 weiterhin ein Speichermedium integriert, um den von der in die jeweilige Steuerungseinrichtung integrierten Korrektureinrichtung erzeugten, druckstellenspezifischen Farbseparationsdatensatz in der jeweiligen Steuereinrichtung 27 zu speichern.

Gemäß Fig. 2 ist das Speichermedium 21 mit den Steuerungseinrichtungen 27 über eine Multiplexereinrichtung 26 gekoppelt. Über die Multiplexereinrichtung 26 kann jeder Farbseparationsdatensatz selektiv einer Steuerungseinrichtung 27 und damit Bebilderungseinrichtung 28 zugeordnet werden.

Bei dem erfindungsgemäßen System zum Bebildern von Druckformen erfolgt demnach eine Korrektur druckstellenunspezifischer Farbseparationsdatensätze in druckstellenspezifische Farbseparationsdatensätze dezentral sowie parallel in den Steuerungseinrichtungen 27, die der Ansteuerung von Bebilderungseinrichtungen 28 dienen.

Die Farbseparationsdatensätze sind demnach bis zur Korrektur in den Steuerungseinrichtungen 27 druckstellenunspezifisch, so dass eine flexible Zuordnung der druckstellenunspezifischen Farbseparationsdatensätze auf einzelne Druckstellen möglich ist. Durch die Parallelisierung der Korrektur in den Steuerungseinrichtungen 27 kann eine kürzere Durchlaufzeit realisiert werden. Darüber hinaus wird die Korrektur zur Bereitstellung druckstellenspezifischer Farbseparationsdatensätze robust, da die entsprechende Korrektur erst unmittelbar vor der eigentlichen Druckstelle durchgeführt wird. Druckstellenspezifische Parameter, wie z. B. Skalierungsdaten und Geometriedaten, die zur Korrektur der druckstellenunspezifischen Farbseparationsdatensätze und damit zur Bereitstellung der druckstellenspezifischen Farbseparationsdatensätze verwendet werden, können in kurzen Zyklen autark in der jeweiligen Druckstelle adaptiert werden.

Die in dem Speichermedium 21 gespeicherten, druckstellenunspezifischen Farbseparationsdatensätze 22 bis 25 können auch anderen Systemen einer Druckmaschine, so z. B. einem Softproofsystem bzw. einer Farbdichteregelungseinrichtung, zur Verfügung gestellt werden. Somit können die vom Raster Image Prozessor 20 bereitgestellten und im Speichermedium 21 gespeicherten Farbseparationsdatensätze 22 bis 25 mehrfach verwendet werden.

### Bezugszeichenliste

- 10: Raster Image Prozessor
- 11: Korrektureinrichtung
- 12: Speichermedium
- 13: korrigierte Farbseparationsdatensatz
- 14: korrigierte Farbseparationsdatensatz
- 15: korrigierte Farbseparationsdatensatz
- 16: korrigierte Farbseparationsdatensatz
- 17: Steuereinrichtung
- 18: Bebilderungseinrichtung

- 20: Raster Image Prozessor
- 21: Speichermedium
- 22: Farbseparationsdatensatz
- 23: Farbseparationsdatensatz
- 24: Farbseparationsdatensatz
- 25: Farbseparationsdatensatz
- 26: Multiplexereinrichtung
- 27: Steuer- und Korrektureinrichtung
- 28: Bebilderungseinrichtung

## Patentansprüche

1. System zum Bebildern von Druckformen, mit einem Raster Image Prozessor zur Zerlegung eines Druckbilddatensatzes in Farbseparationsdatensätze, mit einem Speichermedium zum Speichern von Farbseparationsdatensätzen, mit Steuereinrichtungen und mit Bebilderungseinrichtungen, wobei jede Steuereinrichtung zum Bebildern einer Druckform auf Basis eines Farbseparationsdatensatzes die der Bebilderung der jeweiligen Druckform dienende Bebilderungseinrichtung ansteuert, **dadurch gekennzeichnet, dass** in jede Steuereinrichtung (27) eine Korrektureinrichtung integriert ist, um in dem Speichermedium (21) gespeicherte, druckstellenunspezifische Farbseparationsdatensätze (22, 23, 24, 25) in druckstellenspezifische Farbseparationsdatensätze umzurechnen, die zur Ansteuerung der Bebilderungseinrichtungen (28) verwendbar sind.

2. System nach Anspruch 1, **dadurch gekennzeichnet, dass** in jede Steuereinrichtung (27) weiterhin ein Speichermedium integriert ist, um den von der jeweiligen Korrektureinrichtung erzeugten, druckstellenspezifischen Farbseparationsdatensatz in der jeweiligen Steuereinrichtung (27) zu speichern.

3. System nach Anspruch 1 oder 2, **dadurch gekennzeichnet, dass** zwischen das Speichermedium (21) und die Steuereinrichtungen (27) eine Multiplexereinrichtung (26) geschaltet ist, um die druckstellenunspezifischen Farbseparationsdatensätze selektiv den Steuereinrichtungen (27) zuzuordnen.

4. System nach einem oder mehreren der Ansprüche 1 bis 3, **dadurch gekennzeichnet, dass** die in dem Speichermedium (21) gespeicherten, druckstellenunspezifischen Farbseparationsdatensätze (22, 23, 24, 25) anderen Systemen einer Druckmaschine zur Verfügung stellbar sind.

5. System nach Anspruch 4, **dadurch gekennzeichnet, dass** die in dem Speichermedium (21) gespeicherten, druckstellenunspezifischen Farbseparationsdatensätze (22, 23, 24, 25) einem Softproofsystem zur Verfügung stellbar sind.

6. System nach Anspruch 4 oder 5, **dadurch gekennzeichnet, dass** die in dem Speichermedium (21) gespeicherten, druckstellenunspezifischen Farbseparationsdatensätze (22, 23, 24, 25) einer Farbdichteregelungseinrichtung zur Verfügung stellbar sind.
